# EUROPÄISCHE PATENTSCHRIFT

(11) **EP 3 402 152 B1**
(45) Veröffentlichungstag und Bekanntmachung des Hinweises auf die Patenterteilung: **16.10.2019**
(21) Anmeldenummer: 17169871.5
(22) Anmeldetag: 08.05.2017
(51) Int. Cl.: G05B 19/406, G06F 21/44, H04L 9/32, H04L 29/06

(54) **ANLAGENSPEZIFISCHES, AUTOMATISIERTES ZERTIFIKATSMANAGEMENT**
SYSTEM-SPECIFIC AUTOMATED CERTIFICATE MANAGEMENT
GESTION DE CERTIFICAT AUTOMATISÉE, EN FONCTION DE L'INSTALLATION

(43) Veröffentlichungstag der Anmeldung: 14.11.2018
(73) Patentinhaber: Siemens Aktiengesellschaft, 80333 München (DE)
(72) Erfinder: Lutz, Benjamin, 76327 Pfinztal (DE); Palmin, Anna, 76187 Karlsruhe (DE)

(56) Entgegenhaltungen:
- DE-A1-102011 081 804
- DE-A1-102013 205 051
- US-A1- 2016 112 406
- Anonymous: "Prozessleitsystem - Wikipedia", , 4. Mai 2017 (2017-05-04), XP055397767, Gefunden im Internet: URL:https://de.wikipedia.org/w/index.php?t itle=Prozessleitsystem&oldid=165188304 [gefunden am 2017-08-10]

## Beschreibung

Die Erfindung betrifft ein Verfahren zur Authentifizierung von Geräten und/oder Applikationen, insbesondere Webapplikationen, in einem Leitsystem für eine technische Anlage nach Anspruch 1. Außerdem betrifft die Erfindung ein dazugehöriges Leitsystem für eine technische Anlage nach Anspruch 9.

Im Kontext einer industriellen, technischen Anlage kommen zur Laufzeit sogenannte operative Zertifikate zum Einsatz. Durch die Verwendung der operativen Zertifikate kann eine Authentifikation und eine Kommunikationsintegrität von Kommunikationsteilnehmern in einem Leitsystem der industriellen, technischen Anlage durch kryptographische Mittel erreicht werden.

Ein in einem Gerät sicher hinterlegter, privater Schlüssel wird dabei an einen zugehörigen öffentlichen Schlüssel gebunden. Dabei erlangt eine automatisierte Unterstützung der Abläufe für eine Verwaltung der operativen Zertifikate und den dazugehörigen kryptographischen Schlüsseln im Kontext einer Public Key Infrastruktur (PKI), insbesondere als Basis für eine sichere Kommunikation zwischen Applikationen und Geräten innerhalb der technischen Anlage, zunehmend eine höhere Bedeutung.

Durch eine Reduktion von manuellen Aktionen im Rahmen der Zertifikatsverwaltung und zunehmend automatisierte Abläufe auf Basis vom Standardprotokollen, insbesondere zum Ausrollen und Erneuern von Zertifikaten, können eine Flexibilität und Interoperabilität im Kontext der industriellen Anlage erhöht werden.

Üblicherweise wird die automatisierte Verwaltung von operativen Zertifikaten im Anlagenkontext unter Verwendung eines Standardprotokolls, beispielsweise des Certificate Management Protokolls (CMP), realisiert. Dabei fordern die Geräte und Applikationen die erforderlichen operativen Zertifikate situationsbedingt von einem lokalen Registrierungsdienst, einer sogenannten Local Registration Authority (LRA), an. Dies erfolgt beispielsweise im Fall einer Erneuerung, die aufgrund eines Ablaufs oder eines Widerrufs des Zertifikats notwendig ist.

Dabei senden die Geräte und Applikationen eine Anfrage an den lokalen Registrierungsdienst, den sogenannten Certificate Signing Request (CSR). Der lokale Registrierungsdienst prüft die Anforderung, indem er zuerst eine Signatur, mit der die Anforderung signiert ist, auf Gültigkeit überprüft. Anschließend prüft er, ob ein Gerätezertifikat, eine Seriennummer und ggf. weitere Identifikationsmerkmale der Geräte bzw. der Applikationen in einem Software-Inventar des Leitsystems der technischen Anlage, dem sogenannten Inventory, hinterlegt ist. Im Falle einer erfolgreichen Prüfung wird die Anforderung an die sogenannte Certification Authority (CA) weitergeleitet, die ein operatives Zertifikat für das Gerät bzw. die Applikation ausstellt.

Die Geräte und Applikationen sind bei der Verwendung der zuvor erwähnten Standardprotokolle lediglich dazu befähigt, die Anfrage an den lokalen Registrierungsdienst selbst zu versenden. Die einzelnen Geräte und Applikationen haben keine Kenntnis über eine Topologie der technischen Anlage, über Kommunikationsbeziehungen zwischen den einzelnen Kommunikationsteilnehmern der Anlage oder über weitere Gegebenheiten der technischen Anlage.

Im Bedarfsfall fordert jedes Gerät bzw. jede Applikation selbst ein operatives Zertifikat an, was zu einem hohen Kommunikationsaufkommen in der technischen Anlage bzw. in deren Leitsystem führt.

Bisher wurden die zum Ausrollen von Zertifikaten erforderlichen Funktionalitäten in sogenannten Engineering-Komponenten des Leitsystems der technischen Anlage integriert. Die Zertifikate werden dabei unter Verwendung von proprietären Transportwegen im Rahmen eines Ladevorgangs in die ausgewählten Geräte bzw. Applikationen geladen. Somit erfordert ein, mit dem Ausrollen eines neuen Zertifikats verbundener, Gerätetausch bzw. eine Zertifikatserneuerung bei einem bestehenden Gerät oder einer Applikation ein erneutes Laden der Zertifikate im Rahmen eines erneuten Ladevorgangs. Dieser bringt wiederum einen Stopp der technischen Anlage mit sich.

In der DE 10 2011 081 804 A1 sind ein Verfahren und ein System zum Bereitstellen von gerätespezifischen Betreiberdaten für ein Automatisierungsgerät einer Automatisierungsanlage offenbart.

Die US 2016/0112406 A1 offenbart ein System und ein Verfahren zur Durchführung einer Zugangskontrolle in einem industriellen Steuerungssystem.

Der Erfindung liegt die Aufgabe zugrunde, einen Austausch von Geräten und/oder Applikationen während einer Laufzeit einer technischen Anlage zu ermöglichen.

Diese Aufgabe wird gelöst durch ein Verfahren zur Authentifizierung von Geräten und/oder Applikationen, insbesondere Webapplikationen, in einem Leitsystem für eine technische Anlage mit den Merkmalen des Anspruchs 1 und durch ein Leitsystem für eine technische Anlage gemäß Anspruch 9. Vorteilhafte Weiterbildungen ergeben sich aus den abhängigen Ansprüchen.

Bei einem Verfahren zur Authentifizierung der eingangs beschriebenen Art wird die Aufgabe erfindungsgemäß dadurch gelöst, dass im Rahmen einer Authentifizierung der Geräte und/oder Applikationen innerhalb des Leitsystems Informationen durch wenigstens einen lokalen Registrierungsdienst ermittelt werden, dahingehend, welche Kommunikationsprotokolle und/oder Anwendungen von den Geräten und/oder Applikationen unterstützt werden und/oder aktiv sind. Diese durch den wenigstens einen lokalen Registrierungsdienst ermittelten Informationen werden in wenigstens einem Software-Inventar des Leitsystems hinterlegt.

Neben der eigentlichen Authentifizierung, im Rahmen derer sich die Geräte und/oder Applikationen gegenüber dem lokalen Registrierungsdienst identifizieren, ermittelt der lokale Registrierungsdienst erfindungsgemäß, welche Kommunikationsprotokolle und/oder Anwendungen vom jeweiligen Gerät und/oder Applikation (standardmäßig) unterstützt werden, bzw. welche aktiviert sind. Der lokale Registrierungsdienst kann dadurch den jeweiligen Geräten/Applikationen ausschließlich die Zertifikate zur Verfügung stellen, die zur Nutzung eines bestimmten Protokolls, beispielsweise HTTPS, Secure Syslog oder OPC UA, bzw. einer bestimmten Anwendung benötigt. Diese geräte-/anwendungsspezifische Informationen werden durch den lokalen Registrierungsdienst nachfolgend im Software-Inventar hinterlegt, um für weitere Prozeduren zur Verfügung zu stehen. Die Authentifizierung der Geräte und/oder der Applikationen erfolgt auf Basis von operativen Zertifikaten.

In dem Software-Inventar des Leitsystems werden Informationen bezüglich der Konfiguration des Leitsystems und/oder der mit dem Leitsystem betriebenen technischen Anlage hinterlegt. Die Informationen können dabei aus einer Engineering-Komponente, einer sogenannten Engineering Station (ES), des Leitsystems ausgelesen werden. Bei der Engineering-Komponente kann es sich, ohne sich darauf zu beschränken, um eine SIMATIC PCS 7 Industrial Workstation handeln. Änderungen in der Konfiguration des Leitsystems werden vorteilhafterweise zur Laufzeit der technischen Anlage unverzüglich in dem Software-Inventar abgebildet.

Der lokale Registrierungsdienst liest die in dem Software-Inventar hinterlegten Informationen aus, um bei der Authentifizierung der Geräte und/oder Applikationen zu prüfen, welches operative Zertifikat dem jeweiligen Gerät und/oder der jeweiligen Applikation zugewiesen werden darf.

Der lokale Registrierungsdienst verwendet die Informationen in besonders vorteilhafter Weise dazu, zusätzlich zum erfindungsgemäßen Authentifizierungsverfahren eine Netzwerkkonfiguration der technischen Anlage und Kommunikationsbeziehungen zwischen einzelnen Teilnehmern der technischen Anlage in die im Rahmen der Authentifizierung erfolgte Prüfung einzubeziehen.

Konkret bedeutet dies, dass der lokale Registrierungsdienst prüft, ob die Geräte/Applikationen die Kommunikationsbeziehungen zwischen den einzelnen Teilnehmern aktiv nutzen und somit die entsprechenden Zertifikate auch tatsächlich benötigen. Dadurch lässt sich die Vergabe der Zertifikate an die einzelnen Geräte/Applikationen noch spezifischer durchführen, wodurch die Anzahl an zu vergebenden Zertifikaten insgesamt verringert werden kann. Damit geht eine Verringerung der Komplexität der Zertifikatverwaltung einher. Der Kommunikationsaufwand im Leitsystem der technischen Anlage bzw. der technischen Anlage selbst kann dadurch deutlich verringert werden. Im Falle einer erfolgreichen Prüfung kann der lokale Registrierungsdienst die Anforderung an eine Zertifizierungsstelle, eine sogenannte Certification Authority (CA), weiterleiten, die ein operatives Zertifikat für die Geräte/Applikationen ausstellt und dem lokalen Registrierungsdienst zur Verfügung stellt. Der lokale Registrierungsdienst leitet das operative Zertifikat anschließend an das jeweilige Gerät bzw. die jeweilige Applikation weiter.

Bei einer vorteilhaften Weiterbildung des Verfahrens authentifizieren sich die Geräte und/oder Applikationen bei einer Inbetriebnahme der technischen Anlage gegenüber dem lokalen Registrierungsdienst, um sich in der technischen Anlage als vertrauenswürdige Kommunikationsteilnehmer zu registrieren. Die Authentifizierung der Geräte und/oder Applikationen kann auch zur Laufzeit der technischen Anlage erfolgen. Dies kann nötig sein, wenn ein Austausch von Geräten bzw. Applikationen während der Laufzeit der technischen Anlage erfolgt.

Bevorzugt weisen die Authentifizierung bzw. das jeweilige operative Zertifikat der Geräte und/oder Applikationen eine bestimmte zeitliche Gültigkeit auf, die als gerätespezifische Information in dem Software-Inventar hinterlegt ist. Dabei liest der lokale Registrierungsdienst des Leitsystems vor Ablauf der zeitlichen Gültigkeit der Authentifizierung bzw. des operativen Zertifikats unabhängig von einer Anforderung durch die Geräte und/oder Applikationen Informationen bezüglich der zeitlichen Gültigkeit aus dem Software-Inventar aus und nimmt, falls nötig, eine Erneuerung der Authentifizierung vor, um die zeitliche Gültigkeit der Authentifizierung, insbesondere des jeweiligen operativen Zertifikats vor.

Eine Überwachung der zeitlichen Gültigkeit der Authentifizierung bzw. der operativen Zertifikate kann durch einen Unterdienst des lokalen Registrierungsdienstes. Der Unterdienst überwacht insbesondere das Ablaufdatum von Zertifikaten. Stellt er fest, dass ein Zertifikat zeitnah abläuft, so wird von dem übergeordneten lokalen Registrierungsdienst oder von einem weiteren Unterdienst ein Ersatzzertifikat angefordert. Dabei wird eine aktuelle Konfiguration des Leitsystems bzw. der technischen Anlage berücksichtigt, d.h. beispielsweise wie viele Teilnehmer registriert sind und welche Eigenschaften sie aufweisen bzw. welche Zertifikate sie aktuell verwenden oder in Zukunft verwenden werden.

Die Überwachung des Ablaufs der zeitlichen Gültigkeit der Authentifizierung bzw. der Zertifikate durch den lokalen Registrierungsdienst kann durch äußere Ereignisse initiiert werden. Beispielsweise kann der lokale Registrierungsdienst ein Statussignal bzw. ein Triggersignal von der Zertifizierungsstelle erhalten, und daraufhin die zeitliche Gültigkeit der Authentifizierung bzw. der Zertifikate prüfen. Der lokale Registrierungsdienst fordert dann im Bedarfsfall stellvertretend für jedes beliebige Gerät nach der entsprechenden, zuvor erläuterten Prüfung ein Ersatzzertifikat an. Der Kommunikationsaufwand im Leitsystem der technischen Anlage bzw. der technischen Anlage selbst kann dadurch deutlich verringert werden. Auch verbleibt ein Geheimschlüssel (private key) des jeweiligen Gerätes bzw. der jeweiligen Applikation bei einer Anforderung eines Zertifikats sicher in dem Gerät bzw. der Applikation. An das Software-Inventar wird nur ein öffentlicher Schlüssel (public key) weitergegeben, was die Geheimhaltung innerhalb des Leitsystems und speziell nach außen hin deutlich erhöht bzw. vereinfacht.

Das Verfahren zur Authentifizierung von Geräten oder Applikationen, insbesondere Webapplikationen, wird bevorzugt in einem Leitsystem für eine technische Anlage eingesetzt, welches wenigstens einen lokalen Registrierungsdienst umfasst. Das Leitsystem umfasst dabei vorteilhafterweise wenigstens ein Software-Inventar, um die im Rahmen des erfindungsgemäßen Verfahrens ermittelten Daten zu hinterlegen.

Bei einer bevorzugten Ausführungsform umfasst das Leitsystem zusätzlich wenigstens ein Prozessdatenarchiv, einen sogenannten Process Historian. Das Software-Inventar ist dabei in das Prozessdatenarchiv integriert. Das Prozessdatenarchiv ist als Datenquelle innerhalb des Leitsystems besonders gut geeignet, da es hochverfügbar ausgelegt ist, wodurch sich das erfindungsgemäße Verfahren in einem derart weitergebildeten Leitsystem besonders effizient anwenden lässt.

Bevorzugt weist das Leitsystem zusätzlich wenigstens eine Engineering-Komponente und/oder wenigstens ein Bediensystem, eine sogenannte Operator Station (OS), auf. Bei dem Bediensystem kann es sich, ohne sich darauf zu beschränken, um eine SIMATIC PCS 7 Industrial Workstation handeln. Dabei ist der lokale Registrierungsdienst in der Engineering-Komponente und/oder dem Bediensystem bzw. dem zum Bediensystem dazugehörigen Server integriert. Es ist somit nicht erforderlich, für die Implementierung des lokalen Registrierungsdienstes zusätzliche (Hardware-)Komponenten zu verwenden. Vielmehr kann der lokale Registrierungsdienst in eine vorhandene Architektur eines Leitsystems einer technischen Anlage integriert werden. Somit ist keine zusätzliche Hardware vonnöten, was das Investitionsvolumen für ein derartiges verbessertes Leitsystem gering hält.

Im Zuge einer bevorzugten Verwendung kann das Leitsystem zum Betrieb einer technischen Anlage eingesetzt sein.

Das erfindungsgemäße Authentifizierungsverfahren sowie das dazugehörige Leitsystem und jeweils alle vorteilhaften Weiterbildungen davon erfüllen die den Sicherheitslevels 2 bis 4 entsprechenden Anforderungen der IEC-Norm 62443-3-3 (International Electrotechnical Commission) hinsichtlich der sogenannten Public Key Infrastruktur (PKI).

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- Figur 1: ein erfindungsgemäßes Leitsystem in einer Prinzipskizze; und
- Figur 2: ein Zusammenwirken verschiedener Unterdienste eines lokalen Registrierungsdienstes im Kontext eines erfindungsgemäßen Verfahrens.

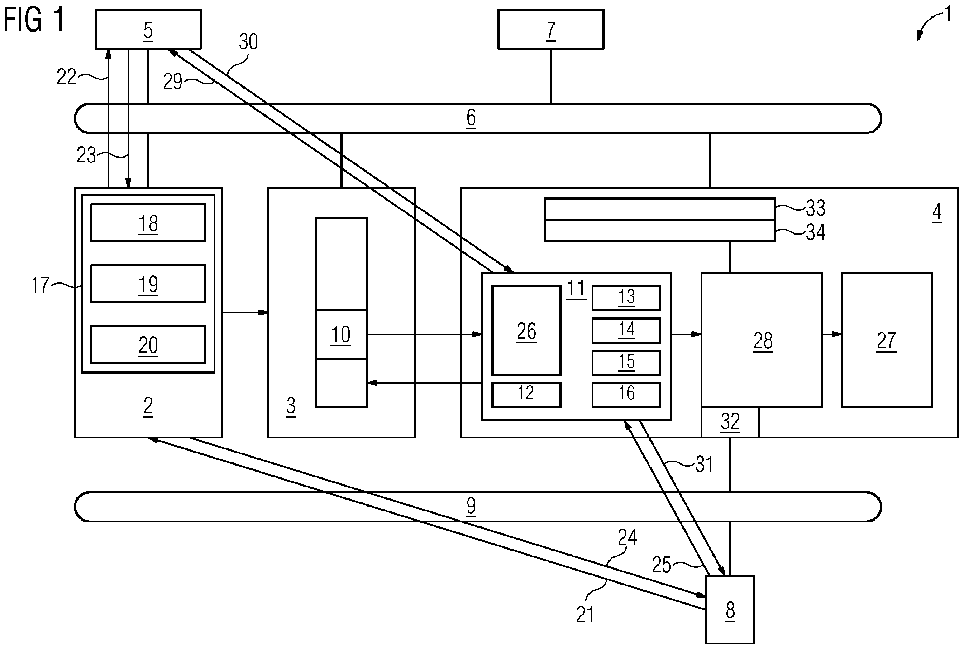

In Figur 1 ist ein erfindungsgemäßes Leitsystem 1 einer technischen Anlage dargestellt. Das Leitsystem umfasst eine Engineering-Komponente bzw. eine Engineering Station 2, ein Prozessdatenarchiv bzw. einen Process Historian 3, einen Server eines Bediensystems bzw. einen Operator System Server 4 und eine Zertifizierungsstelle bzw. eine Certification Authority5. Die Engineering Station 2, der Process Historian 3, der Operator System Server 4 und die Certification Authority 5 stehen über einen Terminalbus 6 miteinander in Verbindung. Ein Benutzer bzw. Client 7 steht mittels des Terminalbusses 6 mit den zuvor genannten vier Komponenten in Verbindung. Der Terminalbus 6 kann, ohne sich darauf zu beschränken, beispielsweise als Industrial Ethernet ausgebildet sein.

An den Operator System Server 4 ist ein Gerät 8 mittels eines Anlagenbusses 9 angeschlossen. Bei dem angeschlossenen Gerät 8 kann es sich dabei alternativ auch um eine Applikation, insbesondere Webapplikation, handeln. Im Rahmen der Erfindung kann eine beliebige Zahl an Geräten und/oder Applikationen an den Operator System Server 4 angeschlossen sein. Der Anlagenbus 9 kann, ohne sich darauf zu beschränken, beispielsweise als Industrial Ethernet ausgebildet sein. Das Gerät 8 kann wiederum mit einer beliebigen Anzahl an Subsystemen (nicht dargestellt) verbunden sein.

In dem Process Historian 3 ist ein Software-Inventar bzw. ein Inventory 10 integriert. In dem Operator System Server 4 ist ein erster lokaler Registrierungsdienst 11 integriert. Der lokale Registrierungsdienst 11 des Operator System Servers 4 weist als Unterdienste einen Manager-Dienst 12, einen Status-Dienst 13, einen Notifier-Dienst 14, einen Distribution-Dienst 15 und einen Registration-Dienst 16 auf, deren Funktionsweise und Aufgaben nachfolgend erläutert werden. Weiterhin umfasst der lokale Registrierungsdienst 11 einen lokalen Datenspeicher 17. Der lokale Registrierungsdienst 11 kann alternativ oder zusätzlich in dem Engineering System 2 integriert sein.

In dem Engineering System 2 ist ein zweiter lokaler Registrierungsdienst 17 integriert. Dieser umfasst als Unterdienste einen Registration-Dienst 18, einen Configuration-Dienst 19 und einen Distribution-Dienst 20, deren Funktionsweise und Aufgaben ebenfalls nachfolgend erläutert werden.

Alle in der technischen Anlage integrierten Geräte 8 bzw. Applikationen müssen sich bei einer Inbetriebnahme der technischen Anlage gegenüber dem lokalen Registrierungsdienst 17 des Engineering Systems 2 authentifizieren, um als vertrauenswürdige Kommunikationsteilnehmer registriert zu sein. Hierzu senden die Geräte/Applikationen 8 eine Anforderung 21 zur Erstellung eines Zertifikats, einen sogenannten Certificate Signing Request (CSR). Die Anforderung der Geräte bzw. Applikationen 8 wird mittels des Registration-Dienstes 18 des lokalen Registrierungsdienstes 17 des Engineering Systems 2 an die Certification Authority 5 weitergebeben.

Im Rahmen der vorliegenden Erfindung wird neben der eigentlichen Authentifizierung der Geräte 8 bzw. Applikationen ermittelt, welche Kommunikationsprotokolle bzw. Anwendungen vom jeweiligen Gerät 8 bzw. der jeweiligen Applikation unterstützt werden. Hierbei prüft der lokale Registrierungsdienst 17 des Engineering Systems 2 unter Zuhilfenahme von Informationen aus dem Inventory 10 des Process Historians 3 zunächst, welche Geräte/Applikationen 5 als vertrauenswürdige Kommunikationsteilnehmer registriert sind sowie welche Zertifikate den Geräten/Applikationen 8 zustehen. Dies setzt voraus, dass im Inventory 10 hinterlegt ist, welche Protokolle und Anwendungen von den in der technischen Anlage integrierten Geräten/Applikationen 8 aktiv unterstützt werden. Diese Prüfung hat zur Folge, dass jedem Gerät bzw. jeder Applikation 8 nur die Zertifikate zur Verfügung gestellt werden, die es zur Nutzung eines bestimmten Protokolls, beispielsweise HTTPS, Secure Syslog oder OPC UA, bzw. einer bestimmten Anwendung benötigt.

Darauffolgend prüft der lokale Registrierungsdienst 17 des Engineering Systems 2 zusätzlich, ob die Geräte bzw. Applikationen 8 die von ihnen prinzipiell unterstützten Zertifikate auch tatsächlich benötigen. Hierzu ermittelt der Configuration-Dienst 19 des lokalen Registrierungsdienstes 17 des Engineering Systems 2 eine Netzwerkkonfiguration der technischen Anlage, einschließlich der Kommunikationsbeziehungen zwischen einzelnen Komponenten der technischen Anlage, und prüft, ob die Geräte/Applikationen 8 die Kommunikationsbeziehungen auch aktiv nutzen und damit die entsprechenden Zertifikate auch tatsächlich benötigen.

Nur im Fall einer erfolgreichen Prüfung bezieht der lokale Registrierungsdienst 17 des Engineering Systems 2 stellvertretend für jedes Gerät bzw. jede Applikation 8 das entsprechende Zertifikat mittels eines entsprechenden Certification Signing Requests 22 und einer Zuweisung 23 von der Certification Authority 5. Das Zertifikat wird abschließend von dem Distribution-Dienst 20 des lokalen Registrierungsdienstes 17 des Engineering Systems 2 über eine Zuweisung 24 an die jeweiligen Geräte/Applikationen 8 übermittelt. Eine Zuweisung der Zertifikate erfolgt damit nur im Bedarfsfall, was das durch die Zertifikatsverwaltung verursachte Kommunikationsaufkommen deutlich verringert.

Es kommt häufig vor, dass zur Laufzeit der technischen Anlage das Engineering System 2 nicht oder nicht ständig zur Verfügung steht. Dazu ist in dem Operator System Server 4 der erste lokale Registrierungsdienst 11 integriert. Dessen Funktionsweise ähnelt der des zweiten, zuvor erläuterten Registrierungsdienstes 17 im Engineering System 2. Das Verfahren zur Authentifizierung von Geräten/Applikationen 8 bzw. zur Vergabe von Zertifikaten an diese zur Laufzeit der technischen Anlage unterscheidet sich von der zuvor erläuterten Authentifizierung bei Inbetriebnahme der technischen Anlage im Wesentlichen dadurch, dass er ereignisgesteuert initiiert wird. Ein solches Ereignis stellt beispielsweise, ohne sich darauf zu beschränken, ein Gerätetausch während der Laufzeit dar. Der Gerätetausch wird mittels des Registration-Dienstes 16 des ersten lokalen Registrierungsdienstes 11 im Inventory abgebildet, ohne hierbei an dieser Stelle auf nähere technische Details einzugehen.

Der Manager-Dienst 12 des lokalen Registrierungsdienstes 11 lädt die für eine Prüfung des von dem ausgetauschten Gerät 8 gestellten Certification Signing Requests 25 notwendigen Informationen aus dem Inventory 10 des Process Historians 3 in einen Datenspeicher 26 des lokalen Registrierungsdienstes 11. Darauffolgend ermittelt der Manager-Dienst 12 zunächst, welche Geräte/Applikationen 5 als vertrauenswürdige Kommunikationsteilnehmer registriert sind sowie welche Zertifikate dem Austauschgerät 8 zustehen. Diese Prüfung hat analog zum Verfahren bei Inbetriebnahme der technischen Anlage zur Folge, dass dem Austauschgerät 8 nur die Zertifikate zur Verfügung gestellt werden, die es zur Nutzung eines bestimmten Protokolls, beispielsweise HTTPS, Secure Syslog oder OPC UA, bzw. einer bestimmten Anwendung benötigt.

Zusätzlich prüft der Manager-Dienst 12, ob das Austauschgerät 8 die von ihm prinzipiell unterstützten Zertifikate auch tatsächlich benötigt. Hierzu ermittelt er eine aktuelle Netzwerkkonfiguration der technischen Anlage, einschließlich der Kommunikationsbeziehungen zwischen einzelnen Komponenten der technischen Anlage, und prüft, ob das Austauschgerät 8 die Kommunikationsbeziehungen auch aktiv nutzt und damit die entsprechenden Zertifikate auch tatsächlich benötigt.

Die Informationen über die Kommunikationsbeziehungen bzw. die Netzwerkkonfiguration der technischen Anlage erhält der Manager-Dienst 12 aus einem Konfigurationsprozess 27 einer Laufzeitumgebung 28 des Operator System Servers 4. Die Informationen werden durch den Manager-Dienst 12 anschließend in dem Inventory 10 des Process Historians 3 hinterlegt. Der Manager-Dienst 12 kann neben den zuvor erwähnten Informationen auch Informationen bezüglich relevanter Clients 7 in dem Inventory 10 hinterlegen.

Nur im Fall einer erfolgreichen Prüfung bezieht der lokale Registrierungsdienst 11 des Operator System Servers 4 stellvertretend für das Austauschgerät 8 das entsprechende Zertifikat mittels eines entsprechenden Certification Signing Requests 29 und einer korrespondierenden Zuweisung 30 von der Certification Authority 5. Das Zertifikat wird abschließend von dem Distribution-Dienst 15 des ersten lokalen Registrierungsdienstes 11 des Operator System Servers 4 über eine Zuweisung 31 an das Austauschgerät 8. Der Distribution-Dienst 15 nutzt dabei Treiber 32 der Laufzeitumgebung 28 des Operator System Servers 4.

Eine Zuweisung der Zertifikate erfolgt damit auch zur Laufzeit nur im Bedarfsfall, was das durch die Zertifikatsverwaltung verursachte Kommunikationsaufkommen deutlich verringert. Gleichzeitig ist damit ein Austausch eines Gerätes zur Laufzeit der technischen Anlage möglich, d.h. diese muss für den Gerätetausch nicht gestoppt werden.

Eine Übertragung von Authentifizierungsdaten bzw. Zertifikaten an den Client bzw. mehrere Clients 7 kann mittels einer in einen Visualisierungsdienst 33 des Operator System Servers 4 integrierten Datenquelle 34 erfolgen.

Alle Zertifikate, die der erste lokale Registrierungsdienst 11 stellvertretend für die Geräte/Applikationen 8 bezogen hat, werden in dem Datenspeicher 26 hinterlegt. Der Status-Dienst 13 des ersten lokalen Registrierungsdienstes 11 überwacht insbesondere das Ablaufdatum der Zertifikate. Stellt er fest, dass ein Zertifikat zeitnah abläuft, so fordert der erste lokale Registrierungsdienst 11 ein Ersatzzertifikat bei der Certification Authority 5 an. Dabei wird insbesondere die aktuelle Konfiguration des Anlagennetzwerkes berücksichtigt.

Dieses Verfahren ist besonders vorteilhaft, wenn die Certification Authority 5 nicht dauerhaft zur Laufzeit der technischen Anlage in Betrieb bzw. erreichbar ist. In dem Fall, Certification Authority 5 zeitweise nicht verfügbar ist, kann der erste lokale Registrierungsdienst 11, gesteuert durch das Ereignis "Certification Authority ist wieder verfügbar", prüfen, ob ein vergebenes Zertifikat zeitnah abläuft. Falls dies der Fall sein sollte, fordert der erste lokale Registrierungsdienst 11 stellvertretend für die Geräte/Applikationen 8 ein Ersatzzertifikat bei der Certification Authority 5 an.

Der Notifier-Dienst 14 des ersten lokalen Registrierungsdienstes 11 überprüft insbesondere, ob ein Gültigkeitsdatum der sich im Inventory 10 befindlichen Zertifikate zeitnah abläuft. In diesem Fall erzeugt er über die Laufzeitumgebung 28 des Operator System Servers 4 eine entsprechende Diagnose-Meldung (Alarm), so dass Bediener des Leitsystems 1 bzw. Wartungspersonal über eine entsprechende Ausgabe in sogenannten Alarm Controls der Clients 7 informiert werden, um darauffolgend entsprechende Handlungen vorzunehmen. Auch regiert der Notifier-Dienst 14 auf weitere, für die Zertifikatsverwaltung relevante Konfigurationsänderungen in der technischen Anlage, indem er entsprechende Meldungen an den Bediener generiert.

Ein weiterer Unterdienst des ersten lokalen Registrierungsdienstes 11 ist der Status-Dienst 13. Der Status-Dienst 13 ermittelt zur Laufzeit der technischen Anlage 1 einen aktuellen Status der genutzten Zertifikate und hinterlegt ein Duplikat der Statusinformationen in dem Inventory 10 des Process Historians 3. Eine Statusinformation kann beispielsweise die Anzahl und Art der Zertifikate sein, welche von den Geräten/Applikationen 8 genutzt wird. Auch kann der Status-Dienst 13 erfassen, ob gegenwärtig noch Zertifikate durch den Distribution-Dienst 15 zugeteilt werden bzw. ob zukünftig noch Zertifikate zugeteilt werden müssen. Auch kann der Status-Dienst 13 eventuell auftretende Fehler bei der Authentifizierung bzw. Zertifikatvergabe protokollieren.

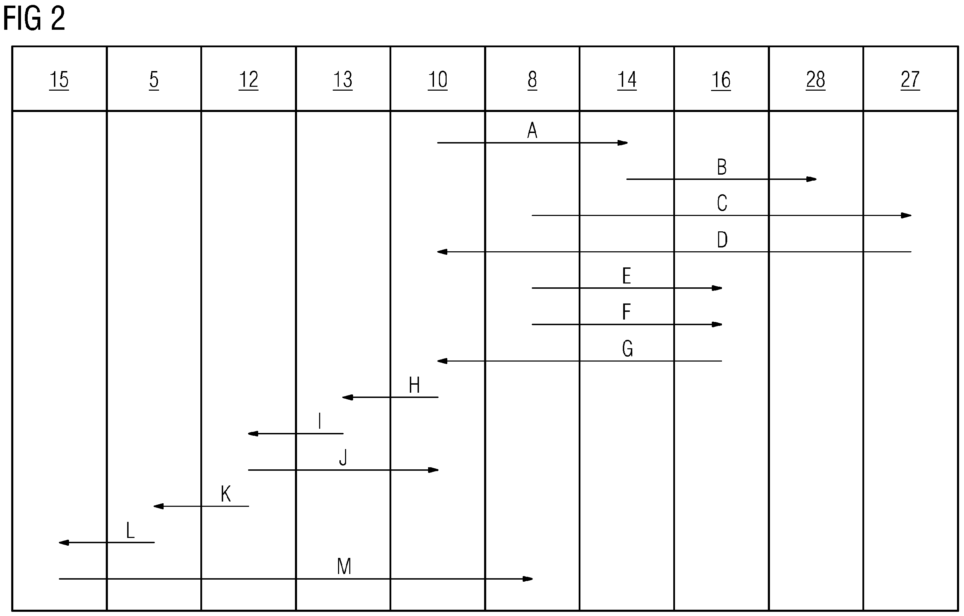

Einen Überblick über das zeitliche und inhaltliche Ineinandergreifen der einzelnen Unterdienste des ersten lokalen Registrierungsdienstes 11 gibt Figur 2. Zeitlich von oben nach unten ablaufend ist ein Gerätetausch zur Laufzeit der technischen Anlage 1 erläutert. Die aufeinanderfolgenden Schritte sind mit A-M gekennzeichnet.

| | |
|---|---|
| Schritt A: | Der Notifier-Dienst 14 stellt fest, dass eine Gültigkeit eines Zertifikates eines Gerätes 8 zeitnah abläuft. Diese Information entnimmt der Notifier-Dienst 14 dem Inventory 10. |
| Schritt B: | Der Notifier-Dienst 14 sendet mittels der Laufzeitumgebung 28 eine Meldung an einen Bediener des Leitsystems 1 bzw. an Wartungspersonal über eine entsprechende Ausgabe in sogenannten Alarm Controls der Clients 7. |
| Schritt C: | Der Bediener des Leitsystems 1 bzw. das Wartungspersonal tauscht das Gerät 8 aus. Die Änderung in der Gerätekonfiguration wird durch den Konfigurationsprozess 27 der Laufzeitumgebung 28 in dem Operator System Server 4 abgebildet. |
| Schritt D: | Der Austausch des Gerätes 8 wird in dem Inventory 10 protokolliert, wobei die Informationen von dem Konfigurationsprozess 27 der Laufzeitumgebung 28 zur Verfügung gestellt werden. Einträge zu dem alten, ausgetauschten Gerät 8 werden aus dem Inventory 10 entfernt. |
| Schritt E: | Der Registration-Dienst 16 ermittelt, welche Zertifikate das neu hinzugekommene Gerät 8 verwenden kann. |
| Schritt F: | Der Registration-Dienst 16 ermittelt, welche Protokolle bzw. Schnittstellen von dem neu hinzugekommen Gerät 8 auch aktiv genutzt werden. |
| Schritt G: | Der Registration-Dienst 16 hinterlegt die in den Schritten E und F ermittelten Informationen in dem Inventory 10. |
| Schritt H: | Der Status-Dienst 13 aktualisiert einen Status des Inventorys 10. Dabei prüft er insbesondere, welche Zertifikate gegenwärtig von Geräten 8 verwendet werden. |
| Schritt I: | Der Status-Dienst 13 informiert den Manager-Dienst 12 über die erfolgte Statusänderung im Inventory 10. |
| Schritt J: | Der Manager-Dienst 12 reagiert auf die Statusänderung im Inventory 10 und beginnt mit der Prüfung, welche Geräte/Applikationen 8 als vertrauenswürdige Kommunikationsteilnehmer registriert sind, sowie welche Zertifikate dem Austauschgerät 8 zustehen. |
| Schritt K: | Der Manager-Dienst fordert das entsprechende Zertifikat bei der Certification Authority 5 an. |
| Schritt L: | Die Certification Authority 5 prüft, ob die Zertifikatsanforderung von einem vertrauenswürdigen lokalen Registrierungsdienst 11 stammt und stellt gegebenenfalls dem Distribution-Dienst 15 ein operatives Zertifikat für das neu hinzugekommen Austauschgerät 8 zur Verfügung. |
| Schritt M: | Der Distribution-Dienst 15 übermittelt das Zertifikat an das Austauschgerät 8 und legt es im Inventory 10 ab. |

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Authentifizierung von Geräten (8) und/oder Applikationen, insbesondere Webapplikationen, in einem Leitsystem (1) für eine technische Anlage auf Basis von operativen Zertifikaten, wobei das Leitsystem (1) wenigstens einen lokalen Registrierungsdienst (11, 17) und wenigstens ein Software-Inventar (10) aufweist, das Verfahren folgende Schritte umfassend:
a) Im Rahmen einer Authentifizierung der Geräte (8) und/oder Applikationen innerhalb des Leitsystems (1) gegenüber dem wenigstens einen lokalen Registrierungsdienst (11, 17) Ermittlung von Informationen durch den wenigstens einen lokalen Registrierungsdienst (11, 17), dahingehend, welche Kommunikationsprotokolle und/oder Anwendungen von den Geräten (8) und/oder Applikationen unterstützt werden und/oder aktiv sind,
b) Hinterlegung der durch den wenigstens einen lokalen Registrierungsdienst (11, 17) ermittelten gerätespezifischen Informationen in dem Software-Inventar (10) des Leitsystems (1),
c) Hinterlegung von Informationen bezüglich einer Konfiguration des Leitsystems (1) und/oder der mit dem Leitsystem (1) betriebenen technischen Anlage in dem Software-Inventar (10),
d) Verwendung der Informationen durch den lokalen Registrierungsdienst (11, 17), um eine Netzwerkkonfiguration der technischen Anlage und Kommunikationsbeziehungen zwischen einzelnen Teilnehmern der technischen Anlage in die im Rahmen der Authentifizierung erfolgte Prüfung der Geräte (8) und/oder Applikationen einzubeziehen,
wobei der lokale Registrierungsdienst prüft, ob die Geräte (8) und/oder Applikationen die Kommunikationsbeziehungen zwischen den einzelnen Teilnehmern aktiv nutzen und somit die entsprechenden Zertifikate auch tatsächlich benötigen, und bei einer erfolgreichen Prüfung dem jeweiligen Gerät (8) und/ oder der jeweiligen Applikationen ein entsprechendes operatives Zertifikat zuweist.

2. Verfahren nach Anspruch 1, bei dem sich die Geräte (8) und/oder Applikationen bei einer Inbetriebnahme der technischen Anlage gegenüber dem lokalen Registrierungsdienst (11, 17) authentifizieren, um sich in der technischen Anlage als vertrauenswürdige Kommunikationsteilnehmer zu registrieren.

3. Verfahren nach Anspruch 2, bei dem sich die Geräte (8) und/oder Applikationen zusätzlich während einer Laufzeit der technischen Anlage gegenüber dem lokalen Registrierungsdienst (11, 17) authentifizieren, um sich in der technischen Anlage als vertrauenswürdige Kommunikationsteilnehmer zu registrieren.

4. Verfahren nach Anspruch 1, bei dem das Leitsystem (1) eine Engineering-Komponente (2) umfasst, aus welcher die Informationen bezüglich der Konfiguration des Leitsystems (1) und/oder der technischen Anlage ausgelesen und in dem Software-Inventar (10) hinterlegt werden.

5. Verfahren nach Anspruch 1 oder 4, bei dem der lokale Registrierungsdienst (11, 17) die in dem Software-Inventar (10) hinterlegten Informationen ausliest, um bei der Authentifizierung der Geräte (8) und/oder Applikationen zu prüfen, welches operative Zertifikat dem jeweiligen Gerät (8) und/oder der jeweiligen Applikation zugewiesen werden darf.

6. Verfahren nach einem der vorangegangenen Ansprüche, bei dem die Authentifizierung der Geräte (8) und/oder Applikationen eine bestimmte zeitliche Gültigkeit aufweist, die als gerätespezifische Information in dem Software-Inventar (10) hinterlegt ist, wobei der lokale Registrierungsdienst (11, 17) des Leitsystems (1) vor Ablauf der zeitlichen Gültigkeit der Authentifizierung unabhängig von einer Anforderung durch die Geräte (8) und/oder Applikationen Informationen bezüglich der zeitlichen Gültigkeit aus dem Software-Inventar (10) ausliest und eine Erneuerung der Authentifizierung zur Verlängerung deren zeitlichen Gültigkeit vornimmt.

7. Leitsystem (1) für eine technische Anlage, das einen lokalen Registrierungsdienst (11, 17) und wenigstens ein Software-Inventar (10) umfasst, wobei der lokale Registrierungsdienst (11, 17) zur Authentifizierung von Geräten (8) oder Applikationen, insbesondere Webapplikationen, gemäß dem Verfahren einer der vorangegangenen Ansprüche vorgesehen und ausgebildet ist.

8. Leitsystem (1) nach Anspruch 7, das zusätzlich wenigstens ein Prozessdatenarchiv (3) umfasst, wobei das Software-Inventar (10) in dem Prozessdatenarchiv (3) integriert ist.

9. Leitsystem (1) nach einem der Ansprüche 7 oder 8, das zusätzlich wenigstens eine Engineering-Komponente (2) und/oder wenigstens ein Bediensystem (4) umfasst, wobei der lokale Registrierungsdienst (11, 17) in der Engineering-Komponente (2) und/oder in dem Bediensystem (4) integriert ist.

10. Verwendung eines Leitsystems (1) gemäß einem der Ansprüche 7 bis 9 zum Betrieb einer technischen Anlage.

## Claims

1. Method for authenticating devices (8) and/or applications, in particular web applications, in a control system (1) for an industrial plant on the basis of operating certificates, wherein the control system (1) has at least one local registration service (11, 17) and at least one software inventory (10), the method comprising the following steps:
a) in the course of authenticating the devices (8) and/or applications within the control system (1) against the at least one local registration service (11, 17), the at least one local registration service (11, 17) determines information as to which communications protocols and/or applications are supported by the devices (8) and/or applications and/or are active,
b) the device-specific information determined by the at least one local registration service (11, 17) is stored in the software inventory (10) of the control system (1),
c) information with regard to a configuration of the control system (1) and/or the industrial plant operated with the control system (1) is stored in the software inventory (10),
d) information is used by the local registration service (11, 17) to include a network configuration of the industrial plant and communication relationships between individual participants of the industrial plant in the check of the devices (8) and/or applications which is carried out in the course of the authentication,
wherein the local registration service checks whether the devices (8) and/or applications actively use the communication relationships between the individual participants and thus also actually require the corresponding certificates, and, if the check is successful, a corresponding operational certificate is assigned to the respective device (8) and/or the respective applications.

2. Method according to claim 1, in which the devices (8) and/or applications authenticate themselves to the local registration service (11, 17) on start-up of the industrial plant in order to register themselves as trustworthy communication participants in the industrial plant.

3. Method according to claim 2, in which the devices (8) and/or applications authenticate themselves to the local registration service (11, 17) during runtime of the industrial plant in order to register themselves as trustworthy communication participants in the industrial plant.

4. Method according to claim 1, in which the control system (1) comprises an engineering component (2) from which the information with regard to the configuration of the control system (1) and/or the industrial plant is read out and stored in the software inventory (10).

5. Method according to claim 1 or 4, in which the local registration service (11, 17) reads out the information stored in the software inventory (10) in order to check, during authentication of the devices (8) and/or applications, which operating certificate can be assigned to the respective device (8) and/or respective application.

6. Method according to one of the preceding claims, in which the authentication of the devices (8) and/or applications has a specific period of validity which is stored as device-specific information in the software inventory (10), wherein, prior to expiration of the period of validity of the authentication and independently of a request by the devices (8) and/or applications, the local registration service (11, 17) of the control system (1) reads out information with regard to the period of validity from the software inventory (10) and renews the authentication to extend the period of validity thereof.

7. Control system (1) for an industrial plant, which control system comprises a local registration service (11, 17) and at least one software inventory (10), wherein the local registration service (11, 17) is provided and configured for authenticating devices (8) or applications, in particular web applications, according to the method of one of the preceding claims.

8. Control system (1) according to claim 7, which additionally comprises at least one process data archive (3), wherein the software inventory (10) is integrated in the process data archive (3).

9. Control system (1) according to one of claims 7 or 8, which additionally comprises at least one engineering component (2) and/or at least one operator system (4), wherein the local registration service (11, 17) is integrated in the engineering component (2) and/or in the operator system (4).

10. Use of a control system (1) according to one of claims 7 to 9 for operating an industrial plant.

## Revendications

1. Procédé d'authentification d'appareil (8) et/ou d'applications, notamment d'applications toile, dans un système (1) de gestion d'une installation technique, sur la base de certificats opératoires, le système (1) de gestion ayant au moins un service (11, 17) local d'enregistrement et au moins un inventaire (10) logiciel,
le procédé comprenant les stades suivants :
a) dans le cadre d'une authentification des appareils (8) et/ou des applications au sein du système de gestion par rapport au au moins un service (11, 17) local d'enregistrement,
détermination d'informations par le au moins un service (11, 17) local d'enregistrement en ce qui concerne les protocoles de communication et/ou les utilisations, qui sont supportées par les appareils (8) et/ou les applications et/ou qui sont actifs,
b) mise en mémoire des informations spécifiques aux appareils déterminées par le au moins un service (11, 17) local d'enregistrement dans l'inventaire (10) logiciel du système (1) de gestion,
c) mise en mémoire d'informations se rapportant à une configuration du système (1) de gestion et/ou de l'installation technique fonctionnant par le système (1) de gestion dans l'inventaire (10) logiciel,
d) utilisation des informations par le service (11, 17) local d'enregistrement, afin d'incorporer une configuration de réseau de l'installation technique et des relations de communication entre divers participants de l'installation technique au contrôle effectué dans le cadre de l'authentification des appareils (8) et/ou des applications, dans lequel le service local d'enregistrement contrôle si les appareils (8) et/ou les applications utilisent activement les relations de communication entre les divers participants et nécessitent ainsi réellement également les certificats correspondants et, si le contrôle est couronné de succès, attribution à l'appareil (8) respectif et/ou aux applications respectives d'un certificat opératoire correspondant.

2. Procédé suivant la revendication 1, dans lequel les appareils (8) et/ou les applications s'authentifient lors d'une mise en fonctionnement de l'installation technique par rapport au service (11, 17) local d'enregistrement, afin de s'enregistrer dans l'installation technique, comme participants de communication dignes de confiance.

3. Procédé suivant la revendication 2, dans lequel les appareils (8) et/ou les applications s'authentifient supplémentairement pendant un temps de marche de l'installation technique par rapport au service (11, 17) local d'enregistrement pour s'enregistrer dans l'installation technique, comme participants de communication dignes de confiance.

4. Procédé suivant la revendication 1, dans lequel le système (1) de gestion comprend un composant (2) d'ingénierie à partir duquel les informations concernant la configuration du système (1) de gestion et/ou l'installation technique sont lues et sont mises en mémoire dans l'inventaire (10) logiciel.

5. Procédé suivant la revendication 1 ou 4, dans lequel le service (11, 17) local d'enregistrement lit les informations mises en mémoire dans l'inventaire (10) logiciel pour contrôler, lors de l'authentification des appareils (8) et/ou des applications, les certificats opératoires, qui peuvent être affectés à l'appareil (8) respectif et/ou à l'application respective.

6. Procédé suivant l'une des revendications précédentes, dans lequel l'authentification des appareils (8) et/ou des applications a une validité déterminée dans le temps, qui est mémorisée sous la forme d'information spécifique aux appareils dans l'inventaire (10) logiciel, le service (11, 17) local d'enregistrement du système (1) de gestion lisant dans l'inventaire (10) logiciel avant l'expiration de la validité dans le temps de l'authentification, indépendamment d'une demande par les appareils (8) et/ou les applications, des informations concernant la validité dans le temps et effectuant un renouvellement de l'authentification pour prolonger sa validité dans le temps.

7. Système (1) de gestion d'une installation technique, qui comprend un service (11, 17) local d'enregistrement et au moins un inventaire (10) logiciel, le service (11, 17) local d'enregistrement étant prévu et constitué pour authentifier des appareils ((8) ou des applications, notamment des applications toile, par le procédé suivant l'une des revendications précédentes.

8. Système (1) de gestion suivant la revendication 7, qui comprend, en outre, au moins un archivage (3) de données de processus, l'inventaire (10) logiciel étant intégré à l'archivage (3) de données de processus.

9. Système (1) de gestion suivant l'une des revendications 7 ou 8, qui comprend, en outre, au moins un composant (2) d'ingénierie et/ou au moins un système (4) de service, le service (11, 17) local d'enregistrement étant intégré au composant (2) d'ingénierie et/ou au système (4) de service.

10. Utilisation d'un système (1) de gestion suivant l'une des revendications 7 à 9, pour faire fonctionner une installation technique.
